# FASCICULE DE BREVET EUROPEEN

(11) **EP 3 491 045 B1**
(45) Date de publication et mention de la délivrance du brevet: **30.03.2022**
(21) Numéro de dépôt: 17765216.1
(22) Date de dépôt: 28.07.2017
(51) Int. Cl.: C08G 63/199, C08G 63/672, C08L 67/00, C08L 67/02, C08L 69/00, C08L 75/04, C08L 77/00

(54) **COMPOSITION POLYMERE COMPRENANT UN POLYESTER THERMOPLASTIQUE**
POLYMERZUSAMMENSETZUNG MIT EINEM THERMOPLASTISCHEN POLYESTER
POLYMER COMPOSITION COMPRISING A THERMOPLASTIC POLYESTER

(30) Priorité: 29.07.2016 FR 1657426
(43) Date de publication de la demande: 05.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052144
(87) Numéro de publication internationale: WO 2018/020193

(56) Documents cités:
- EP-A1- 2 781 552
- US-A1- 2012 177 854

## Description

La présente invention se rapporte à une composition polymère comprenant un polyester thermoplastique à base d'isosorbide, ladite composition polymère présentant des propriétés améliorées.

### Arrière-plan technologique de l'invention

Les matières plastiques sont devenues incontournables pour la fabrication en série d'objets. En effet, leur caractère thermoplastique leur permet d'être transformées à cadence élevée en toutes sortes d'objets.

Par exemple, certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un inconvénient de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées.

Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet, leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270 °C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Dans le domaine des matières plastiques, il existe un besoin constant de disposer de nouvelles solutions, notamment à base d'isosorbide, pour la fabrication ou l'obtention d'objet aux caractéristiques améliorées.

Afin de répondre à cet objectif, il est connu de mélanger ensemble les polymères pour obtenir des compositions qui présentent des propriétés améliorées permettant d'avoir des champs d'applications et d'utilisations plus étendus.

Le brevet US 6,140,422 décrit un mélange de polyesters à base d'isosorbide et d'autres polymères thermoplastiques. Le polyester à base d'isosorbide inclus des motifs acides téréphtaliques et des motifs éthylène glycol et présente une viscosité d'au moins 0,35 dL/g. le mélange du polyester peut être réalisé avec des polymères thermoplastiques tels que les résines styrènes, les polyarylethers ou encore les polyhhydroxylethers. D'une manière générale, l'amélioration des propriétés d'un mélange de polymère passe par une bonne compatibilité physique ou chimique, dans ce cas, lorsque le polyester est mélangé au polymère thermoplastique une réaction de transestérification peut se produire en fonction des polymères sélectionnés et il peut être particulièrement avantageux que cette réaction se déroule en milieu humide pour faciliter cette réaction. Or, tous les polymères thermoplastiques utilisés dans ce brevet ne peuvent pas réaliser de transestérification en milieu humide lorsqu'ils sont mélangés aux polyesters à base d'isosorbide.

Il existe toujours un besoin de compositions polymères à base d'isosorbide permettant d'obtenir des objets plastiques aux propriétés améliorées, ainsi toujours qu'un besoin de développer des polyesters à base d'isosorbide pour améliorer les propriétés de polymères existant afin d'obtenir après mélange, des compositions polymères aux propriétés améliorées.

Cependant, il ne suffit pas de mélanger deux polymères pour obtenir une composition polymère intéressante dotée de propriétés inédites. En effet à quelques exceptions près, il n'est pas possible de mélanger à l'échelle moléculaire deux polymères. Ces derniers se séparent inéluctablement en domaines de taille macroscopique, séparés par des interfaces faibles. Le matériau résultant de la composition polymère obtenue est en général plus mauvais que les polymères de départ pris séparément.

Il est donc du mérite de la demanderesse d'avoir trouvé que cet objectif pouvait être atteint, contre toute attente, avec un polyester thermoplastique à base d'isosorbide ne présentant pas d'éthylène glycol alors qu'il était connu jusqu'à présent que ce dernier était indispensable pour l'incorporation dudit isosorbide en effectuant une sélection pertinente sur les polymères thermoplastiques employés dans le mélange et en employant un procédé susceptible de favoriser la transestérification (présence d'humidité dans le mélange polymère de départ).

Les compositions polymères obtenues à partir du mélange de ces polyesters thermoplastiques avec d'autres polymères permettent ainsi de d'obtenir des objets aux caractéristiques techniques améliorées.

Bien que le document EP 2 781 552 décrit des polyesters, il ne décrit ni ne suggère un polyester thermoplastique exempt de motifs diol aliphatique non cyclique ou comprenant une quantité molaire de motifs diol aliphatique non cyclique très faible mélangé avec un autre polymère.

### Résumé de l'invention

Un premier objet de l'invention concerne une composition polymère comprenant :
- un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[ (A)+(B)] étant d'au moins 0,10 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g.
- un polymère choisi parmi les polyesters aromatiques, les polyesters aliphatiques, les polyesters ethers, les polyamides, les polycarbonates, le polyéther bloc amide, les polyuréthannes et les polyuréthanes sans isocyanate.

Un second objet de l'invention concerne un procédé d'amélioration des propriétés physiques et chimique d'un polymère spécifique tel que défini précédemment.

La composition polymère selon l'invention est particulièrement avantageuse et présente des propriétés améliorées. En effet, la présence du polyester thermoplastique dans la composition permet d'apporter des propriétés supplémentaires et d'élargir les champs d'applications d'autres polymères.

### Description détaillée de l'invention

Un premier objet de l'invention concerne donc une composition polymère comprenant :
- un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[ (A)+(B)] étant d'au moins 0,10 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g.
- un polymère choisi parmi les polyesters aromatiques, les polyesters aliphatiques, les polyesters ethers, les polyamides, les polycarbonates, le polyéther bloc amide, les polyurethannes et les polyuréthanes.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique est exempt de motifs diol aliphatiques non cycliques ou en comprend une faible quantité.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est avantageusement inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration *cis,* dans la configuration *trans* ou peut être un mélange de diols en configuration *cis et trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,10 et d'au plus 0,75. Avantageusement, ce ratio est d'au moins 0,10 et d'au plus 0,65.

Un polyester thermoplastique particulièrement adapté pour l'obtention de la composition polymère comprend :
- une quantité molaire de motifs 1,4 : 3,6-dianhydrohexitol (A) allant de 2,5 à 54 % mol ;
- une quantité molaire de motifs diol alicyclique (B) autre que les motifs 1,4 : 3,6-dianhydrohexitol (A) allant de 5 à 42,5 % mol ;
- une quantité molaire de motifs acide téréphtalique (C) allant de 45 à 55 % mol.

En fonction de l'application recherchée par la composition polymère, le polyester thermoplastique peut être un polyester thermoplastique semi-cristallin et comprend ainsi :
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Cependant, pour d'autres applications, le polyester thermoplastique peut être un polyester thermoplastique amorphe et comprend ainsi :
- une quantité molaire de motifs 1,4 : 3,6-dianhydrohexitol (A) allant de 16 à 54 % mol;
- une quantité molaire de motifs diol alicyclique (B) autre que les motifs 1,4 : 3,6-dianhydrohexitol (A) allant de 5 à 30 % mol ;
- une quantité molaire de motifs acide téréphtalique (C) allant de 45 à 55 % mol.

L'homme du métier saura ainsi adapter les quantités molaires en différents motifs et vérifier l'aspect semi-cristallin ou amorphe du polyester obtenu, notamment par la détection de raies de diffraction aux rayons X ou par la présence d'un pic de fusion endothermique en Analyse Calorimétrique Différentielle à Balayage (DSC).

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN ¹H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques présentent une température de transition vitreuse allant de 85 à 200°C, par exemple de 90 à 115°C s'ils sont semi-cristallins et par exemple de 116°C à 200 °C s'ils sont amorphes.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Les polyesters thermoplastiques utilisés selon l'invention, lorsqu'ils sont semi-cristallins, présentent une température de fusion allant de 210 à 295°C, par exemple de 240 à 285 °C.

Avantageusement, lorsque le polyester thermoplastique est semi-cristallin il présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique de la composition polymère selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique selon l'invention est supérieure à 70 mL/g et de préférence inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin ou amorphe des polyesters thermoplastiques utilisés selon la présente invention se caractérise, après un traitement thermique de 16h à 170°C, par la présence ou non de raies de diffraction aux rayons X ou d'un pic de fusion endothermique en Analyse Calorimétrique Différentielle à Balayage (DSC). Ainsi, lorsqu'il y a la présence de raies de diffraction aux rayons X et d'un pic de fusion endothermique en Analyse Calorimétrique Différentielle à Balayage (DSC), le polyester thermoplastique est semi-cristallin, le cas contraire il est amorphe.

Le polyester thermoplastique tel que précédemment défini présente bien des avantages au sein de la composition polymère.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,10 et d'au plus 0,75 et à une viscosité réduite en solution supérieure à 70 mL/g et de préférence inférieure à 150 mL/g, les polyesters thermoplastiques permettent d'obtenir des compositions polymères aux propriétés améliorées qui permettant d'avoir des champs d'applications et d'utilisations plus étendus.

Outre un polyester thermoplastique, la composition selon l'invention comprend un autre polymère dénommé ci-après en tant que polymère supplémentaire.

Selon l'invention, le polymère supplémentaire est choisi parmi :
- les polyesters aromatiques comme par exemple le polytéréphtalate de triméthylène (PTT), le polytéréphtalate d'éthylène (PET), le polytéréphtalate de butylène (PBT), le polynaphtalate d'éthylène (PEN) ou encore le polynaphtalate de butylène (PBN).
- les polyesters aliphatiques comme par exemple le polybutylène succinate (PSB), l'acide polylactique (PLA), le polybutylène succinate-co-adipate (PBSA), le polybutylène adipate, le polyéthylène azelaiate ou encore le polybuthylène sébacate.
- les polyesters éthers comme par exemple l'élastomère thermoplastique Hytrel^{®} (poly (butylène téréphtalate) - bloc- poly (butyl ether))
- les polyamides comme par exemple le polyamide semi aromatique mXD6, le poly(p-phénylènetéréphtalamide)(PA PPD-T) ou encore le poly(m-phénylèneisophtalamide) (MPD-I).
- les polycarbonates,
- les polyéthers bloc amide,
- les polyuréthannes avec ou sans isocyanate

D'une manière préférentielle, le polymère supplémentaire est un polyester éther ou un polyamide et d'une manière encore plus préférentielle, le mXD6 ou un élastomère thermoplastique comme par exemple l'Hytrel ^{®}.

La composition polymère selon l'invention peut être obtenue selon les méthodes classiques connues de l'homme du métier pour le mélange de polymères. Par exemple, le mélange peut être obtenu par des mélangeurs internes ou des malaxeurs, ou par des systèmes usuels de mise en forme des polymères thermoplastiques comme les appareillages d'extrusion ou de co-extrusion.

De plus, la composition polymère peut être obtenue directement par le mélange à partir de l'état fondu après polymérisation du polyester thermoplastique et du polymère.

Une fois obtenue, la composition polymère pourra être mise en forme en fonction des applications visées.

Selon une alternative, le polyester thermoplastique et le polymère supplémentaire peuvent être conditionnés, avant d'être mélangés, sous une forme facilement manipulable telle que des pellets ou des granulés. D'une manière préférentielle, le polyester thermoplastique et le polymère sont conditionnés sous forme de granulés. Ainsi, la composition polymère selon l'invention peut être par exemple obtenue par extrusion ou co-extrusion des différents granulés.

La composition polymère selon l'invention est donc obtenue par mélange entre un polyester thermoplastique et un polymère supplémentaire. Le mélange a la particularité d'être réalisé sans séchage, autrement dit, le polyester thermoplastique et le polymère additionnel n'ont pas besoin d'être séchés avant d'être mélangés, par exemple par extrusion. D'une manière préférentielle le taux d'humidité résiduelle avant l'étape de mélange est supérieur à 150 ppm, de préférence supérieur à 200 ppm et de préférence encore, supérieur à 300 ppm.

Ainsi, parmi les réactions chimiques qui peuvent se produire au cours du mélange, les réactions de transestérification sont favorisées.

Le mélange des polyesters thermoplastiques selon l'invention avec un polymère supplémentaire permet d'obtenir des compositions pour lesquelles les plages d'utilisations sont potentialisées comparativement aux polymères supplémentaires seuls.

Par exemple, le mélange d'un polyester selon l'invention avec un polyester éther permet d'obtenir une composition polymère ayant une température de fusion plus élevée comparativement aux seuls polyesters éthers.

Un autre exemple peut être donné par le mélange d'un polyester thermoplastique selon l'invention avec un polyamide. La composition polymère ainsi obtenue présente notamment, lorsqu'elle est mise sous la forme de film, une amélioration de la perméabilité aux gaz.

Selon un mode de réalisation particulier, la composition polymère comprend également un agent compatibilisant permettant de potentialiser les réactions d'estérifications en jouant le rôle de catalyseur. De tels exemples d'agents sont notamment les acides et les alcools polyfonctionnels. Par exemple, l'agent compatibilisant peut être le tétrabutoxyde de titane.

Un ou plusieurs additifs peuvent également être ajoutés lors de l'obtention de la composition polymère à partir du polyester thermoplastique afin de lui conférer des propriétés particulières.

Ainsi, à titre d'exemple d'additif, on peut citer les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres lignocellulosiques et d'amidon granulaire non déstructuré. Ces charges ou fibres peuvent permettre d'améliorer la dureté, la rigidité ou la perméabilité à l'eau ou aux gaz.

L'additif peut également être choisi parmi des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

Enfin, l'additif peut également être un agent antistatique ou encore un agent anti-block tel que des dérivés de molécules hydrophobes par exemple les Incroslip^{™} ou Incromol^{™} de Croda.

En fonction des applications recherchées, la composition polymère peut être mise en forme selon les techniques connues de l'homme du métier et pourra ainsi revêtir une multitude d'aspect, comme par exemple un film.

D'une manière avantageuse et grâce à ses propriétés particulières, la composition polymère selon l'invention trouve une application toute particulière pour la fabrication d'objets ou d'éléments plastiques.

Un second objet de l'invention concerne un procédé d'amélioration des propriétés physiques ou chimiques de polymères.

Le procédé selon l'invention permet d'améliorer les propriétés mécaniques ou physique de certains polymères à les mélangeant à un polyester thermoplastique.

Le procédé selon l'invention comprend ainsi les étapes suivantes de :
- Fourniture d'un polymère choisi parmi les polyesters aromatiques, les polyesters aliphatiques, les polyesters éthers, les polyamides, les polycarbonates, les polyéthers block amide et les polyuréthannes,
- Mélange dudit polymère avec un polyester thermoplastique tel que défini précédemment,
- Récupération dudit mélange.

L'étape de mélange peut être réalisée selon les techniques connues de l'homme du métier. Par exemple, le mélange peut être réalisé par des techniques d'extrusion ou de co-extrusion.

Le procédé selon l'invention permet ainsi d'améliorer les propriétés mécaniques et/ou physiques du polymère fourni.

Le polyester thermoplastique particulièrement adapté pour l'obtention de la composition polymère peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ■ un premier stade d'oligomérisation pendant lequel le milieu réactionnel est agité sous atmosphère inerte à une température allant de 265 à 280 °C, avantageusement de 270 à 280°C, par exemple 275°C ;
   ■ un second stade de condensation des oligomères pendant lequel les oligomères formés sont agités sous vide à une température allant de 278 à 300 °C afin de former le polyester, avantageusement de 280 à 290 °C, par exemple 285 °C ;
- une étape de récupération du polyester thermoplastique.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80 °C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité pour l'obtention de la composition polymère.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1 .

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 03, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que I'lrgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique ainsi récupéré peut ensuite être mis en forme tel que décrit précédemment.

Selon une variante du procédé de synthèse, lorsque le polyester est semi-cristallin, une étape d'augmentation de masse molaire peut être réalisée après l'étape de récupération du polyester thermoplastique.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250 °C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320°C.

Le polyester thermoplastique semi-cristallin obtenu après l'étape d'augmentation de masse molaire est récupéré puis mis en forme tel que décrit précédemment.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés :
1,4-Cyclohexane dimethanol (pureté 99%, mélange d'isomères cis et trans)
Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich
Hytrel^{®}: Hytrel 5556 de Dupont
mXD6 : grade S6007 de Mitsubishi Gaz Chemical

### Exemple 1 : Composition polymère comprenant un polyester thermoplastique et un polyester éther.

### A : Polymérisation d'un polyester thermoplastique P1

Dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel à 60°C.

Le mélange réactionnel est ensuite chauffé à 275°C (4°C/min) sous 6,6 bars de pression et sous agitation constante (150 tr/min) jusqu'à obtenir un taux d'estérification de 87% (estimé à partir de la masse de distillat collectée). Puis, la pression est réduite à 0,7 mbar en 90minutes selon une rampe logarithmique et la température amenée à 285°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous forme de granulés **G1** d'environ 15 mg.

Les granulés **G1** sont ensuite utilisés dans une étape de post condensation à l'état solide.

Ainsi, les granulés **G1** sont cristallisés pendant 2h en étuve sous vide à 170°C.

Une étape de post condensation en phase solide a été réalisée sur 10 kg de ces granulés durant 20h à 210°C sous flux d'azote (1500 1/h) pour augmenter la masse molaire. La résine après condensation en phase solide présente une viscosité réduite en solution de 103.4 mL.g-1.

L'analyse par RMN ¹H du polyester montre que le polyester **P1** contient 17,0 %mol d'isosorbide par rapport aux diols.

Concernant les propriétés thermiques, le polyester **P1** présente une température de transition vitreuse de 96°C et une température de fusion de 253°C avec une enthalpie de fusion de 23,2J/g.

### B : Extrusion pour le mélange.

Un mélange « à sec » à 70% en poids de polyester **P1** (humidité résiduelle 0,1%) et 10% en poids du polyester ether Hytrel^{®} est introduit dans une extrudeuse TSA de diamètre 26 avec un rapport L/D de 40 avec 8 zones de chauffe.

Le débit total de granulé est fixé à 5 kg/h et les zones de chauffe sont réglées aux températures telles que décrites dans le tableau 1 ci-dessous :

**TABLEAU 1**

| Zone 1 | Zone 2 | Zone 3 | Zone 4 | Zone 5 | Zone 6 | Zone 7 | Zone 8 |
|---|---|---|---|---|---|---|---|
| T ambiante | 260 | 280 | 290 | 290 | 290 | 280 | 275 |

Le jonc extrudé en sortie d'extrudeuse est découpé pour former des granulés G1' de 20 à 25 mg chacun.

Ces granulés G1' sont séchés sous vide à 150°C avant d'être injectés. L'humidité résiduelle dans les granulés G1' est de 125 ppm.

### C : Injection pour mise en forme

Une injection est effectuée sur une presse Engel VICTORY 80.

Les granulés **G1'** obtenus à l'étape d'extrusion sont maintenus en atmosphère sèche et introduits dans la trémie de la presse à injecter avec les températures suivantes (4 zones de chauffes, buse -> alim) : 275/275/260/260, la température du moule est fixée à 50°C. Les granulés sont injectés sous forme de barreaux (ou éprouvettes) de 4 mm d'épaisseur.

Les paramètres utilisés pour l'injection sont présentés dans le tableau 2 ci-dessous :

**Tableau 2**

| **Paramètres** | **Unités** | **Valeurs** |
|---|---|---|
| Température zone d'introduction | °C | 220 |
| Température du plastique à l'état fondu (buse / fourreau) | °C | 275/275/260/260 |
| Température du moule | °C | 50 |
| Vitesse d'injection | mm/s | 80 |
| Pression de maintien | bars | 29 |
| Durée du maintien | s | 15 |
| Temps de refroidissement | s | 15 |

Des éprouvettes sont ainsi obtenues.

L'analyse thermomécanique en dynamique montre une température de transition alpha 1 (Tα1) à basse température (-55°C) ainsi qu'une température de transition alpha 2 (Tα2) à 85 °C.

L'analyse en DSC montre un point de fusion à 258 °C ainsi que la température de transition vitreuse Tg associée à la Tα1 à -55 °C.

La Tg associée à la Tα2 n'apparait pas sur les thermogrammes.

La composition polymère répond dans cet exemple à la définition d'un élastomère thermoplastique et possède une plage d'utilisation élargie par rapport à celle de l'Hytrel^{®}. En effet la température de fusion Tf est mesurée à 258°C au lieu de 220 °C pour l'Hytrel^{®} seul.

### Exemple 2 : Composition polymère comprenant un polyester thermoplastique et un polyamide.

### A : Polymérisation

La polymérisation est réalisée selon le même mode opératoire, les mêmes quantités et les mêmes composés que l'exemple 1.

### B : Extrusion pour le mélange

Un mélange « à sec » est réalisé avec 80% en poids de polyester P1 obtenu à l'étape de polymérisation (humidité résiduelle 0,1%), 20% en poids de polyamide mXD6 et 0,1% rajouté de tétrabutoxyde de titane comme agent compatibilisant, qui permet de catalyser la réaction de transestéramidification Le mélange est ensuite introduit dans une extrudeuse TSA de diamètre 26 avec un rapport UD de 40 avec 8 zones de chauffe.

Le débit total de granulé est fixé à 5 kg/h et les zones de chauffe sont réglées aux températures telles que décrites dans le tableau 3 ci-dessous :

**Tableau 3**

| Zone 1 | Zone 2 | Zone 3 | Zone 4 | Zone 5 | Zone 6 | Zone 7 | Zone 8 |
|---|---|---|---|---|---|---|---|
| T ambiante | 260 | 280 | 290 | 290 | 290 | 280 | 275 |

Le jonc extrudé en sortie d'extrudeuse est découpé pour former des granulés **G2** de 20 à 25 mg chacun.

### C : Extrusion pour la mise en forme

Les granulés **G2** obtenus à l'étape B d'extrusion sont séchés sous vide à 140°C afin d'atteindre des taux d'humidité résiduelle inférieurs à 300 ppm, dans cet exemple, la teneur en eau des granulés est de 148 ppm.

Les granulés maintenus en atmosphère sèche sont alors introduits dans la trémie de l'extrudeuse.

L'extrudeuse utilisée est une extrudeuse Collin équipée d'une filière plate, l'ensemble est complété par une calandreuse. Les paramètres d'extrusion sont regroupés dans le tableau 4 ci-dessous :

**Tableau 4**

| **Paramètres** | **Unités** | **Valeurs** |
|---|---|---|
| Température (alim -> filière) | °C | 280/285/285/290/295 |
| Vitesse de rotation de la vis | rpm | 80 |
| Température des rouleaux | °C | 40 |

Les feuilles ainsi extrudés à partir du polyester présentent une épaisseur de 4 mm.

Les feuilles sont alors découpés en carré de dimension 11,2x11,2 cm puis, à l'aide d'une machine d'étirage Karo IV de marque Brückner, les découpes des feuilles sont étirées en deux directions en procédant à une température de 130°C à 140°C avec un taux d'étirage de 2,8x2,8 et en un temps de 2 secondes dans les deux directions.

Un film bi-orienté d'une épaisseur de 14 µm est ainsi obtenu après ce traitement.

Les films obtenus à partir de la composition polymère selon l'invention présentent des propriétés augmentées vis-à-vis de la perméabilité aux gaz comparativement à des films obtenus avec le polyester seul.

## Revendications

1. Composition polymère comprenant :
- un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[ (A)+(B)] étant d'au moins 0,10 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g,
- un polymère supplémentaire choisi parmi les polyesters aromatiques, les polyesters aliphatiques, les polyesters éthers, les polyamides, les polycarbonates, les polyéthers bloc amide et les polyuréthannes.

2. Composition polymère selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Composition polymère selon l'une des revendications 1 ou 2, **caractérisée en ce que** le 1,4 : 3,6-dianhydrohexitol (A) est l'isosorbide.

4. Composition polymère selon l'une des revendications 1 à 3, **caractérisée en ce que** le polyester thermoplastique est exempt de motif diol aliphatique non cyclique ou comprend une quantité molaire de motifs diol aliphatique non cyclique, par rapport à la totalité des motifs monomériques du polyester, inférieure à 1%, de préférence le polyester est exempt de motif diol aliphatique non cyclique.

5. Composition polymère selon l'une des revendications 1 à 4, **caractérisée en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

6. Composition polymère selon l'une des revendications 1 à 5, **caractérisée en ce qu'**elle comprend un ou plusieurs additifs et/ou un agent compatibilisant.

7. Procédé d'amélioration des propriétés physiques ou chimiques de polymère comprenant ainsi les étapes suivantes de :
- Fourniture d'un polymère choisi parmi les polyesters aromatiques, les polyesters aliphatiques, les polyesters éthers, les polyamides, les polycarbonates, les polyéthers block amide et les polyuréthannes.
- Mélange dudit polymère avec un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio (A)/[(A)+(B)] étant d'au moins 0,10 et d'au plus 0,75, ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 70 mL/g,
- Récupération dudit mélange.

8. Procédé selon la revendication 7, **caractérisé en ce que** l'étape de mélange est réalisée par des techniques d'extrusion ou de co-extrusion.

## Patentansprüche

1. Polymere Zusammensetzung, umfassend:
- einen thermoplastischen Polyester, umfassend wenigstens eine 1,4:3,6-Dianhydrohexitol-Einheit (A), wenigstens eine alicyclische Diol-Einheit (B), die von den 1,4:3,6- Dianhydrohexitol-Einheiten verschieden ist, wenigstens eine Terephthalsäureeinheit (C), wobei das Verhältnis (A)/[(A)+(B)] wenigstens 0,10 und höchstens 0,75 beträgt, wobei der Polyester frei von nicht-zyklischen aliphatischen Diol-Einheiten ist oder bezogen auf die Gesamtheit der Monomer-Einheiten des Polyesters eine molare Menge an nicht-zyklischen aliphatischen Diol-Einheiten von weniger als 5 % umfasst und dessen reduzierte Lösungsviskosität (25 °C; Phenol (50 %m): ortho-Dichlorbenzol (50 %m); 5 g/l Polyester) größer als 70 ml/g ist,
- ein zusätzliches Polymer, gewählt aus aromatischen Polyestern, aliphatischen Polyestern, Polyesterethern, Polyamiden, Polycarbonaten, Polyetherblockamiden und Polyurethanen.

2. Polymere Zusammensetzung nach Anspruch 1, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, stark bevorzugt 1,4-Cyclohexandimethanol.

3. Polymere Zusammensetzung nach einem der Ansprüche 1 oder 2, **dadurch gekennzeichnet, dass** das 1,4:3,6-Dianhydrohexitol (A) Isosorbid ist.

4. Polymere Zusammensetzung nach einem der Ansprüche 1 bis 3, **dadurch gekennzeichnet, dass** der thermoplastische Polyester frei von nicht-zyklischen aliphatischen Diol-Einheiten ist oder, bezogen auf die Gesamtheit der Monomer-Einheiten des Polyesters, eine molare Menge an nicht-zyklischen aliphatischen Diol-Einheiten von weniger als 1 % umfasst, und der Polyester bevorzugt frei von nicht-zyklischen aliphatischen Diol-Einheiten ist.

5. Polymerzusammensetzung nach einem der Ansprüche 1 bis 4, **dadurch gekennzeichnet, dass** das Molverhältnis (3,6-Dianhydrohexitol-Einheit (A) + alicyclische Diol-Einheit (B), die von 1,4:3,6-Dianhydrohexitol-Einheiten (A) verschieden ist)/(Terephthalsäure-Einheit (C)) 1,05 bis 1,5 beträgt.

6. Polymerzusammensetzung nach einem der Ansprüche 1 bis 5, **dadurch gekennzeichnet, dass** sie ein oder mehrere Additive und/oder ein Kompatibilisierungsmittel umfasst.

7. Verfahren zur Verbesserung der physikalischen oder chemischen Eigenschaften eines Polymers, umfassend die folgenden Schritte:
- Bereitstellung eines Polymers, das aus aromatischen Polyestern, aliphatischen Polyestern, Polyesterethern, Polyamiden, Polycarbonaten, Polyetherblockamiden und Polyurethanen gewählt ist,
- Mischung des Polymers mit einem thermoplastischen Polyester, umfassend wenigstens eine 1,4:3,6-Dianhydrohexitol-Einheit (A), wenigstens eine alicyclische Diol-Einheit (B), die von den 1,4:3,6-Dianhydrohexitol-Einheiten (A) verschieden ist, wenigstens eine Terephthalsäureeinheit (C), bei der das Verhältnis (A)/[(A)+(B)] wenigstens 0,10 und höchstens 0,75 beträgt, wobei der Polyester frei von nicht-zyklischen aliphatischen Diol-Einheiten ist oder, bezogen auf die Gesamtheit der Monomer-Einheiten des Polyesters, eine molare Menge an nicht-zyklischen aliphatischen Diol-Einheiten von weniger als 5 % umfasst und dessen reduzierte Lösungsviskosität (25°C; Phenol (50 %m):ortho-Dichlorbenzol (50 %m); 5 g/l Polyester) größer als 70 ml/g ist,
- Gewinnung der genannten Mischung.

8. Verfahren nach Anspruch 7, **dadurch gekennzeichnet, dass** der Schritt des Mischens durch Extrusions- oder Coextrusionsmethoden durchgeführt wird.

## Claims

1. A polymer composition comprising:
- a thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] ratio is at least 0.10 and at most 0.75, said polyester not containing any aliphatic non-cyclic diol units or comprising a molar amount of aliphatic non-cyclic diol units, relative to all the monomer units of the polyester, of less than 5%, and the reduced solution viscosity (25°C; phenol (50%m): ortho-dichlorobenzene (50%m); 5 g/l of polyester) of said polyester is greater than 70 ml/g,
- an additional polymer chosen from aromatic polyesters, aliphatic polyesters, polyester ethers, polyamides, polycarbonates, polyether block amides and polyurethanes.

2. The polymer composition as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The polymer composition as claimed in either of claims 1 and 2, **characterized in that** the 1,4:3,6-dianhydrohexitol (A) is isosorbide.

4. The polymer composition as claimed in one of claims 1 to 3, **characterized in that** the thermoplastic polyester does not contain any aliphatic non-cyclic diol units, or comprises a molar amount of aliphatic non-cyclic diol units, relative to all the monomer units of the polyester, of less than 1%, preferably the polyester does not contain any aliphatic non-cyclic diol units.

5. The polymer composition as claimed in one of claims 1 to 4, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

6. The polymer composition as claimed in one of claims 1 to 5, **characterized in that** it comprises one or more additives and/or a compatiblilizing agent.

7. A process for improving the physical or chemical properties of a polymer, thus comprising the following steps of:
- provision of a polymer chosen from aromatic polyesters, aliphatic polyesters, polyester ethers, polyamides, polycarbonates, polyether block amides and polyurethanes,
- blending of said polymer with a thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] ratio is at least 0.10 and at most 0.75, said polyester not containing any aliphatic non-cyclic diol units or comprising a molar amount of aliphatic non-cyclic diol units, relative to all the monomer units of the polyester, of less than 5%, and the reduced solution viscosity (25°C; phenol (50%m): ortho-dichlorobenzene (50%m); 5 g/l of polyester) of said polyester is greater than 70 ml/g,
- recovery of said blend.

8. The process as claimed in claim 7, **characterized in that** the blending step is carried out by extrusion or coextrusion techniques.
